# EUROPEAN PATENT SPECIFICATION

(11) **EP 3 085 617 B1**
(45) Date of publication and mention of the grant of the patent: **16.09.2020**
(21) Application number: 16155393.8
(22) Date of filing: 12.02.2016
(51) Int. Cl.: B64C 3/26, H01Q 1/28, H01Q 1/42, B64C 3/20, H01Q 19/10

(54) **CONFORMAL COMPOSITE ANTENNA ASSEMBLY**
KONFORME VERBUNDANTENNENANORDNUNG
ENSEMBLE D'ANTENNE COMPOSITE CONFORME

(30) Priority: 20.04.2015 US 201514691147
(43) Date of publication of application: 26.10.2016
(73) Proprietor: The Boeing Company, Chicago, IL 60606-1596 (US)
(72) Inventor: LAVIN, Ronald O., CHICAGO, IL 60606-2016 (US); MCCARTHY, Dennis K., CHICAGO, IL 60606-2016 (US); TYRRELL, Stacey A., CHICAGO, IL 60606-2016 (US); KUBE, Courtney B., CHICAGO, IL 60606-2016 (US)
(74) Representative: Plasseraud IP

(56) References cited:
- US-A1- 2005 285 804
- US-A1- 2009 130 995
- US-A1- 2010 315 299
- US-A1- 2011 050 509
- US-A1- 2012 038 539
- US-A1- 2013 082 885
- US-B1- 7 151 504

## Description

### FIELD

The present disclosure is generally related to antenna structures and, more particularly, to a conformal composite antenna assembly including a structural composite panel having an RF window.

### BACKGROUND

Most modern vehicles include antennas for communications. Traditionally, antennas are simply mounted (e.g., bolted) to an exterior of the vehicle. Disadvantageously, exterior mounted antennas increase wind drag, increase lightning strike susceptibility, have higher failure rates due to environmental exposure (e.g., ice accretion), increase antenna signatures (e.g., visual or radar cross-section) and/or are limited to structurally suitable mounting locations. These disadvantages are particularly significant when exterior mounted antennas are used with highspeed vehicles, such as aircraft.

One solution to the disadvantages of exterior mounted antennas is the utilization of radomes or other enclosures mounted to the exterior of the vehicle to protect the exterior mounted antenna from exposure to the environment. While radomes can reduce wind drag and environmental exposure, they are non-structural and, thus, do not provide load bearing or ballistic tolerant properties.

Accordingly, those skilled in the art continue with research and development efforts in the field of conformal antenna structures.

US7151504 according to its abstract: A radome that includes a first plurality of plies arranged to define a window portion and a second plurality of plies arranged to define an attachment portion. A first portion of the first plurality of plies is also included within the second plurality of plies and a second portion of the first plurality of plies is not included in the second plurality of plies. US2010/315299 according to its abstract: Fibers may be intertwined to form structures for electronic devices and other parts. Fibers may be intertwined using computer-controlled braiding, weaving, and knitting equipment. Binder materials may be selectively incorporated into the intertwined fibers. By controlling the properties of the intertwined fibers and the patterns of incorporated binder, structures can be formed that include antenna windows, sound-transparent and sound-blocking structures, structures that have integral rigid and flexible portions, and tubes with seamless forked portions. Fiber-based structures such as these may be used to form cables and other parts of headphones or other electronic device accessories, housings for electronic devices such as housings for portable computers, and other structures. US2011/050509 according to its abstract: An electronic device may have a cavity antenna. The cavity antenna may have a logo-shaped dielectric window. An antenna resonating element for the cavity antenna may be formed from conductive traces on a printed circuit board. An antenna resonating element may be formed from the traces. The antenna resonating element may be mounted on an antenna support structure. A conductive cavity structure for the cavity antenna may have a planar lip that is mounted flush with an interior surface of a conductive housing wall. The cavity structure may have more than one depth. Shallower planar portions of the cavity structure may lie in a plane. The antenna resonating element may be located between the plane of the shallow cavity walls and an external surface of the conductive housing wall. US2013/082885 according to its abstract: A housing includes a base layer and a decorative layer formed on the base layer. The base layer includes a first portion and a second portion joining with the first portion. The first portion and the second portion cooperatively form an outer surface of the base layer. The first portion is composed of hardened carbon fiber woven fabric impregnated with resin. The second portion is composed of hardened glass fiber woven fabric impregnated with resin. The decorative layer formed on the outer surface. A method for making the housing and an electronic device using the device housing are provided.. US2012/038539 according to its abstract: An integrated radio frequency (RF)/optical window includes an RF radome portion provided from a composite material substantially transparent to RF energy disposed about an optical window configured for use with an optical phased array.

### SUMMARY

In one embodiment, there is provided a composite panel according to claim 1.

In an example useful for understanding the invention, the disclosed composite structure may include an interconnected plurality of composite panels, wherein at least one composite panel of the plurality of composite panels includes a structural first laminate including a first composite material opaque to electromagnetic radiation, the first laminate further including an outer perimeter edge and an inner perimeter edge, and a structural second laminate including a second composite material transparent to electromagnetic radiation, the second laminate being disposed within and physically joined with the first laminate along the inner perimeter edge.

In another example useful for understanding the invention, the disclosed conformal composite antenna assembly may include a composite panel including a structural first laminate including a first composite material opaque to electromagnetic radiation, the first laminate further including an outer perimeter edge and an inner perimeter edge, and a structural second laminate including a second composite material transparent to electromagnetic radiation, the second laminate being disposed within and physically joined with the first laminate along the inner perimeter edge, an antenna positioned relative to the second laminate, and a resonance cavity disposed behind the second laminate and the antenna.

Other embodiments of the disclosed apparatus and method will become apparent from the following detailed description, the accompanying drawings and the appended claims.

### BRIEF DESCRIPTION OF THE DRAWINGS

Fig. 1 is a schematic block diagram of one embodiment of the disclosed composite structure;
Fig. 2 is a schematic plan view of one embodiment of the first composite panel of Fig. 1;
Fig. 3 is a schematic side elevational view, in section, of one embodiment of the first composite panel of Fig. 1;
Fig. 4 is a schematic side elevational view, in section, of another embodiment of the first composite panel of Fig. 1;
Fig. 5 is a partial schematic side elevational view, in section, of another embodiment of the first composite panel of Fig. 1;
Fig. 6 is a partial schematic side elevational view, in section, of another embodiment of the disclosed composite structure of Fig. 1;
Fig. 7 is a schematic top and side perspective view of another embodiment of the disclosed composite structure of Fig. 1;
Fig. 8 is a schematic top and side perspective view of another embodiment of the disclosed composite structure of Fig. 1;
Fig. 9 is a flow diagram of one embodiment of the disclosed method for manufacturing the conformal composite antenna assembly of Fig. 1;
Fig. 10 is a block diagram of aircraft production and service methodology; and
Fig. 11 is a schematic illustration of an aircraft.

### DETAILED DESCRIPTION

The following detailed description refers to the accompanying drawings, which illustrate specific embodiments of the disclosure. Other embodiments having different structures and operations do not depart from the scope of the present disclosure. Like reference numerals may refer to the same element or component in the different drawings.

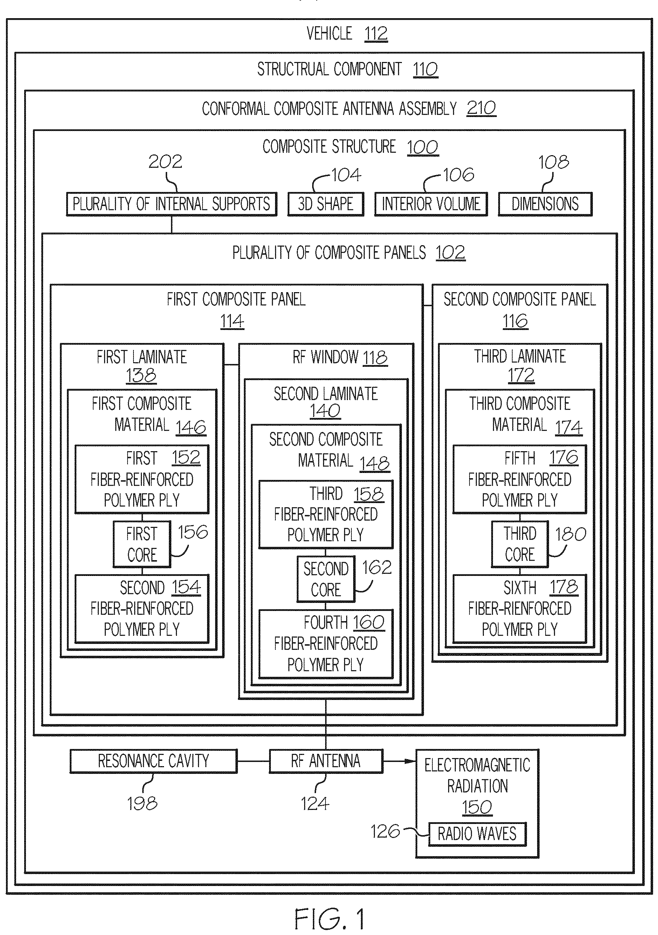

In Fig. 1, referred to above, solid lines, if any, connecting various elements and/or components may represent mechanical, electrical, fluid, optical, electromagnetic and other couplings and/or combinations thereof. As used herein, "coupled" means associated directly as well as indirectly. For example, a member A may be directly associated with a member B, or may be indirectly associated therewith, e.g., via another member C. It will be understood that not all relationships among the various disclosed elements are necessarily represented. Accordingly, couplings other than those depicted in the block diagrams may also exist. One or more elements shown in solid lines may be omitted from a particular example without departing from the scope of the present disclosure. Similarly, additional features not limited to the examples presented, may be combined with some or all of the features shown and described herein.

Referring to Fig. 1, one embodiment of the disclosed composite structure, generally designated 100, may include plurality of composite panels 102. Plurality of composite panels 102 may be interconnected to form composite structure 100 having three-dimensional ("3D") shape 104 and defining hollow interior volume 106. For example, plurality of composite panels 102 may include composite panel 114, also referred to herein as first composite panel 114, and composite panel 116, also referred to herein as second composite panel 116.

Unless otherwise indicated, the terms "first," "second," "third," "fourth," etc. are used herein merely as labels, and are not intended to impose ordinal, positional, or hierarchical requirements on the items to which these terms refer. Moreover, reference to a "second" item does not require or preclude the existence of lower-numbered item (e.g., a "first" item) and/or a higher-numbered item (e.g., a "third" item).

While one example of composite structure 100, as illustrated in Fig. 1, includes only two composite panels 114, 116, those skilled in the art will recognize that other examples of composite structure 100 may include any number of composite panels 102 (e.g., a third composite panel, a fourth composite panel, etc.) suitably interconnected to form a desired 3D shape 104.

Composite structure 100 may include any desired 3D shape 104. 3D shape 104 may include various dimensions 108. As examples, dimensions 108 may include a length dimension, a width dimension, a height dimension and/or a cross-sectional dimension of composite structure 100.

At least one of plurality of composite panels 102 (e.g., first composite panel 114) may include radio frequency ("RF") window 118. RF window 118 may be configured to be transparent to electromagnetic radiation 150, for example, at select wavelengths. As one general, non-limiting example, RF window 118 may be configured to not interfere with RF signals (e.g., radio waves 126) transmitted and/or received by RF antenna 124. As one specific, non-limiting example, RF window 118 may be transparent to radio waves 126 having frequencies from approximately 3 kHz to approximately 300 GHz.

Referring still to Fig. 1, generally, a location of RF window 118 about composite structure 100 (or the position of RF window 118 on structural component 110) may be dictated by various factors. As one example, the location of RF window 118 may be dictated by coverage limitations of an RF signal (e.g., radio waves 126) transmitted and/or received by RF antenna 124, for example, as determined by coverage analysis. For instance, RF window 118 may be located to limit shadowing from nearby obstructions, such as other structural components of vehicle 112. As another example, the location of RF window 118 may be dictated by the type of communication desired. For instance, RF window 118 may be located to improve air-to-space communication, air-to-air communication and/or air-to-ground communication. As another example, the location of RF window 118 may be dictated by structural requirements of structural component 110, for example, as determined through structural analysis. For instance, RF window 118 may be located at a position that does not negatively impact the ability of structural component 110 to withstand loads (e.g., a structurally benign position). As yet another example, RF window 118 may be located at a position that reduces interference with other antennas (not explicitly illustrated).

The dimensions of RF window 118 may be dictated by various factors. For example, the size (e.g., two-dimensional area and/or thickness) may be dictated by, for example, the size of RF antenna 124, the frequency of radio waves 126, the desired passband of radio waves 126, and the like.

While one example of composite structure 100, as illustrated in Fig. 1, may include only one RF window 118 in one of plurality of composite panels 102 (e.g., first composite panel 114), in other examples, first composite panel 114 may include more than one RF window 118 (not explicitly shown in Fig. 1). Similarly, other composite panels of plurality of composite panels 102 (not explicitly shown in Fig. 1) may include at least one RF window 118.

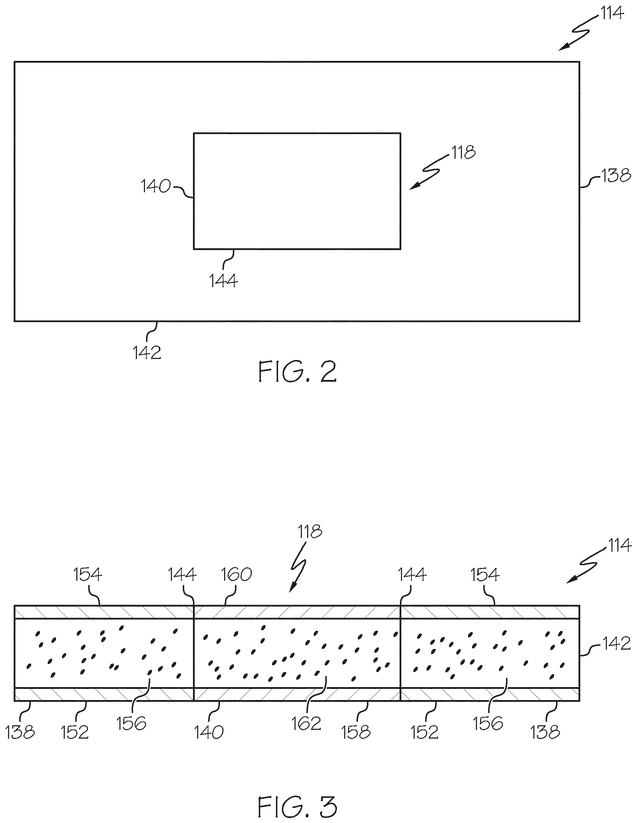

Referring to Fig. 2, one embodiment of first composite panel 114 may include first laminate 138 and second laminate 140. First laminate 138 may include outer perimeter edge 142 and inner perimeter edge 144. Second laminate 140 may be disposed within and physically joined with first laminate 138 along inner perimeter edge 144. Second laminate 140 may define RF window 118.

As one example, first laminate 138 and/or second laminate 14 may be a structural laminate. As used herein, the term "structural" generally refers to the ability to handle the strains, stresses and/or forces, generally referred to herein as "loads," encountered during movement of vehicle 112 (e.g., during flight of an aircraft).

Referring to Fig. 1, and with reference to Fig. 2, first laminate 138 may include first composite material 146 (Fig. 1). First composite material 146 may be opaque to electromagnetic radiation 150. As one general, non-limiting example, first composite material 146 may be configured to block RF signals (e.g., radio waves 126) transmitted and/or received by RF antenna 124. As one specific, non-limiting example, first composite material 146 may be opaque to radio waves 126 having frequencies from approximately 3 kHz to approximately 300 GHz.

Second laminate 140 may include second composite material 148 (Fig. 1). Second composite material 148 may be transparent to electromagnetic radiation 150, for example, at select wavelengths. As one general, non-limiting example, second composite material 148 may be configured not to interfere with RF signals (e.g., radio waves 126) transmitted and/or received by RF antenna 124. As one specific, non-limiting example, second composite material 148 may be transparent to radio waves 126 having frequencies from approximately 3 kHz to approximately 300 GHz.

Referring to Fig. 3, and with reference to Fig. 1, first laminate 138 may include at least one first fiber-reinforced polymer ply (or layer) 152, at least one second fiber-reinforced polymer ply 154 and first core 156. First core 156 may be interposed between first fiber-reinforced polymer ply 152 and second fiber-reinforced polymer ply 154 to form a sandwich structure. Second laminate 140 may include at least one third fiber-reinforced polymer ply 158, at least one fourth fiber-reinforced polymer ply 160 and a second core 162. Second core 162 may be interposed between third fiber-reinforced polymer ply 158 and fourth fiber-reinforced polymer ply 160 to form a sandwich structure.

As one general, non-limiting example, first fiber-reinforced polymer ply 152, second fiber-reinforced polymer ply 154, third fiber-reinforced polymer ply 158 and fourth fiber-reinforced polymer ply 160 may include a sheet or mat of reinforcing fibrous material bonded together by a polymer matrix material. The polymer matrix material may include any suitable thermoset resin (e.g., epoxy) or thermoplastic. The fibrous material may include any suitable woven or nonwoven (e.g., knit, braided or stitched) continuous reinforcing fibers or filaments.

First fiber-reinforced polymer ply 152, third fiber-reinforced polymer ply 158, first core 156, second core 162, second fiber-reinforced polymer ply 154, and fourth fiber-reinforced polymer ply 160 may be consecutively laid up, for example, within a mold (not shown) and co-cured to form first composite panel 114. As one example, first fiber-reinforced polymer ply 152, second fiber-reinforced polymer ply 154, third fiber-reinforced polymer ply 158 and fourth fiber-reinforced polymer ply 160 may include a sheet of the reinforcing fibrous material pre-impregnated with the polymer matrix material (e.g., a pre-preg), also known as a dry lay up. As another example, first fiber-reinforced polymer ply 152, second fiber-reinforced polymer ply 154, third fiber-reinforced polymer ply 158 and fourth fiber-reinforced polymer ply 160 may include a sheet of the reinforcing fibrous material and the polymer matrix material is applied to the reinforcing fibrous material, also known as a wet lay up.

Each of first fiber-reinforced polymer ply 152, second fiber-reinforced polymer ply 154, third fiber-reinforced polymer ply 158 and fourth fiber-reinforced polymer ply 160 may include structural and transmissive characteristics and/or properties. The structural and transmissive characteristics of the selected reinforcing fibrous material may include, but are not limited to, tensile strength, electrical conductivity and/or dielectric constant.

The structural and transmissive characteristics of first fiber-reinforced polymer ply 152 and second fiber-reinforced polymer ply 154 may be dictated by, for example, the tensile strength, electrical conductivity and/or dielectric constant of the reinforcing fibrous material and/or the polymer matrix material and may be considered in determining the suitability of first fiber-reinforced polymer ply 152 and second fiber-reinforced polymer ply 154 for use in first laminate 138.

As one general, non-limiting example, first fiber-reinforced polymer ply 152 and/or second fiber-reinforced polymer ply 154 may be conductive and block the passage of electromagnetic radiation 150 (e.g., radio waves 126) (Fig. 1). As one specific, non-limiting example, first fiber-reinforced polymer ply 152 and/or second fiber-reinforced polymer ply 154 may be a carbon fiber-reinforced polymer. First fiber-reinforced polymer ply 152 and second fiber-reinforced polymer ply 154 may include the same constituent materials (e.g., reinforcing fibrous material and/or polymer matrix material) or may include different constituent materials.

The structural and transmissive characteristics of third fiber-reinforced polymer ply 158 and fourth fiber-reinforced polymer ply 160 may be dictated by, for example, the tensile strength, electrical conductivity and/or dielectric constant of the reinforcing fibrous material and/or the polymer matrix material and may be considered in determining the suitability of third fiber-reinforced polymer ply 158 and fourth fiber-reinforced polymer ply 160 for use in second laminate 140.

As one general, non-limiting example, third fiber-reinforced polymer ply 158 and/or fourth fiber-reinforced polymer ply 160 may be a dielectric and allow the passage of electromagnetic radiation 150 (e.g., radio waves 126) (Fig 1). As one specific, non-limiting example, third fiber-reinforced polymer ply 158 and/or fourth fiber-reinforced polymer ply 160 may be a fiberglass fiber-reinforced polymer. As another specific, non-limiting example, third fiber-reinforced polymer ply 158 and/or fourth fiber-reinforced polymer ply 160 may be a glass fiber-reinforced polymer. As another specific, non-limiting example, third fiber-reinforced polymer ply 158 and/or fourth fiber-reinforced polymer ply 160 may be a quartz fiber-reinforced polymer. Third fiber-reinforced polymer ply 158 and/or fourth fiber-reinforced polymer ply 160 may include the same constituent materials (e.g., reinforcing fibrous material and/or polymer matrix material) or may include different constituent materials.

As one general, non-limiting example, first core 156 and second core 162 may include a solid core material. As one specific, non-limiting example, first core 156 and second core 162 may include a honeycomb structured core material. As another specific, non-limiting example, first core 156 and second core 162 may include a syntactic foam core material. As another specific, non-limiting example, first core 156 and second core 162 may include a foam.

Similarly, each of first core 156 and second core 162 may include structural and transmissive characteristics and/or properties. The structural and transmissive characteristics of the selected core material may include, but are not limited to, tensile strength, electrical conductivity and/or dielectric constant. The structural and transmissive characteristics of the selected core material may be considered in determining the suitability of first core 156 for use in first laminate 138 and/or second core 162 for use in second laminate 140.

As one general, non-limiting example, first core 156 may be conductive and block the passage of electromagnetic radiation 150 (e.g., radio waves 126) (Fig. 1). As one specific, non-limiting example, first core 156 may include a structural foam, such as thermoplastic or thermosetting syntactic foam. As another specific, non-limiting example, first core 156 may include open cell foam, such as urethane foam. As another specific, non-limiting example, first core 156 may include closed cell foam.

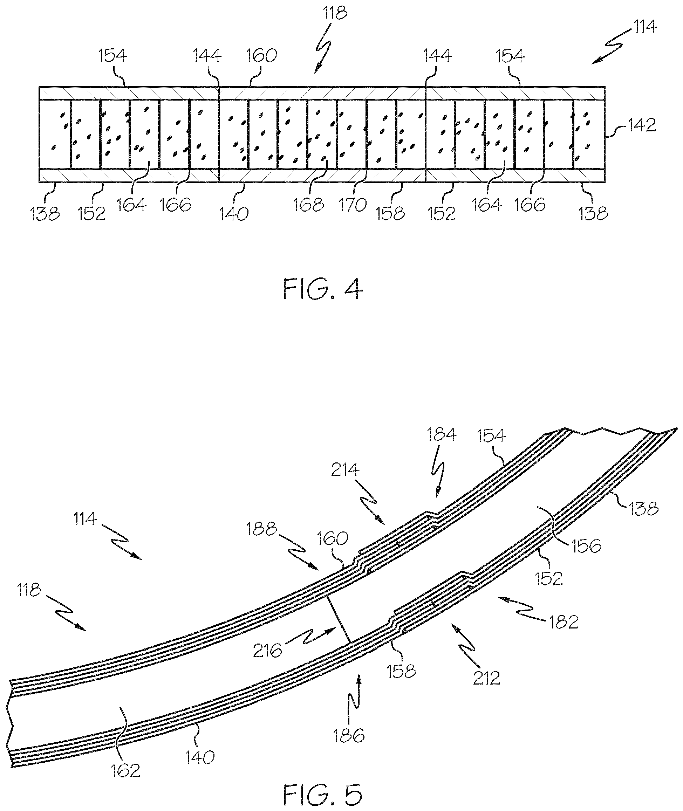

Referring to Fig. 4, first laminate 138 may include pin-reinforced first core 164. Pin-reinforced first core 164 may be one example of providing a structural first laminate 138. Other techniques for forming a structural first laminate 138 are also contemplated. As one general, non-limiting example, pin-reinforced first core 164 may include closed cell foam reinforced with a plurality of conductive reinforcing pins 166. As one example, conductive reinforcing pins 166 may include carbon. Conductive reinforcing pins 166 may extend partially or completely through a thickness of pin-reinforced first core 164.

Referring again to Fig. 3, and with reference to Fig. 1, as one general, non-limiting example, second core 162 may be a nonconductive dielectric and allow the passage of electromagnetic radiation 150, for example, at select wavelengths (e.g., radio waves 126). As one specific, non-limiting example, second core 162 may include structural foam. As another specific, non-limiting example, second core 162 may include open cell foam. As another specific, non-limiting example, second core 162 may include closed cell foam.

Referring again to Fig. 4, second laminate 140 may include pin-reinforced second core 168. Pin-reinforced second core 168 may be one example of providing a structural second laminate 140. Other techniques for forming a structural second laminate 140 are also contemplated. As one general, non-limiting example, pin-reinforced second core 168 may include closed cell foam reinforced with a plurality of nonconductive reinforcing pins 170. As one example, nonconductive reinforcing pins 170 may include glass. As another general, non-limiting example, nonconductive reinforcing pins 170 may include quartz. Nonconductive reinforcing pins 170 may extend partially or completely through a thickness of pin-reinforced second core 168. As yet another general, non-limiting example, pin-reinforced second core 168 may include nonconductive pin-reinforced closed cell foam.

The reinforcing pins may provide additional structural integrity to the core of the composite panel. The reinforcing pins may also be used as damage mitigation and/or to limit damage propagation. As one example, use of conductive reinforcing pins 166 in pin-reinforced first core 164 may provide a highly durable and ballistic resistant first laminate 138. As another example, use of nonconductive reinforcing pins 170 in pin-reinforced second core 168 may provide a highly durable and ballistic resistant second laminate 140. As yet another example, use of conductive reinforcing pins 166 in pin-reinforced first core 164 and nonconductive reinforcing pins 170 in pin-reinforced second core 168 may provide a highly durable and ballistic resistant composite panel (e.g., first composite panel 114).

Pin-reinforced second core 168 may also include a plurality of conductive reinforcing pins 166. Addition of conductive reinforcing pins 166 may modify the transmissive characteristics of pin-reinforced second core 168. For example, the addition of conductive reinforcing pins 166 may allow for frequency selective transmissive characteristics of pin-reinforced second core 168 and, thus, RF window 118

Referring to Figs. 2 and 3, and with reference to Fig. 1, when forming a composite panel (e.g., first composite panel 114) including RF window 118, second laminate 140 is integrated to first laminate 138. For example, third fiber-reinforced polymer ply 158 may be interleafed with first fiber-reinforced polymer ply 152 along inner perimeter edge 144. Second core 162 may be adjoined (e.g., next to and joined) with first core 156 along inner perimeter edge 144. As one example, an outer perimeter (not explicitly illustrated) of second core 162 may abut (e.g., touch) an inner perimeter (not explicitly illustrated) of first core 156. Fourth fiber-reinforced polymer ply 160 may be interleafed with second fiber-reinforced polymer ply 154 along inner perimeter edge 144.

Referring to Fig. 5, as one example, first laminate 138 may include plurality of first fiber-reinforced polymer plies 182 (e.g., two or more first fiber-reinforced polymer plies 152) and plurality of second fiber-reinforced polymer plies 184 (e.g., two or more second fiber-reinforced polymer plies 154). Second laminate 140 may include plurality of third fiber-reinforced polymer plies 186 (e.g., two or more third fiber-reinforced polymer plies 158) and plurality of fourth fiber-reinforced polymer plies 188 (e.g., two or more fourth fiber-reinforced polymer plies 160). Plurality of third fiber-reinforced polymer plies 186 and plurality of first fiber-reinforced polymer plies 182 may be interleafed. Plurality of fourth fiber-reinforced polymer plies 188 and plurality of second fiber-reinforced polymer plies 184 may be interleafed.

At least a portion of at least one third fiber-reinforced polymer ply 158 of plurality of third fiber-reinforced polymer plies 186 may extend past inner perimeter edge 212 of at least one first fiber-reinforced polymer ply 152 of plurality of first fiber-reinforced polymer plies 182 when interleafed. At least a portion of at least one fourth fiber-reinforced polymer ply 160 of plurality of fourth fiber-reinforced polymer plies 188 may extend past inner perimeter edge 214 of at least one second fiber-reinforced polymer ply 154 of plurality of second fiber-reinforced polymer plies 184 when interleafed. Inner perimeter edge 216 of first core 156 may be offset from inner perimeter edge 212 of plurality of first fiber-reinforced polymer plies 182 and inner perimeter edge 214 of plurality of second fiber-reinforced polymer plies 184 to increase the structural integrity of first composite panel 114.

Those skilled in the art will recognize that the total number of fiber-reinforced polymer plies (e.g., plurality of first fiber-reinforced polymer plies 182, plurality of second fiber-reinforced polymer plies 184, plurality of third fiber-reinforced polymer plies 186, plurality of fourth fiber-reinforced polymer plies 188) and/or the thickness of the cores (e.g., first core 156 and second core 162) may vary as dictated by, for example, the desired structural and/or transmissive characteristics of first composite panel 114, the desired purpose of composite structure 100 (Fig. 1) and the like.

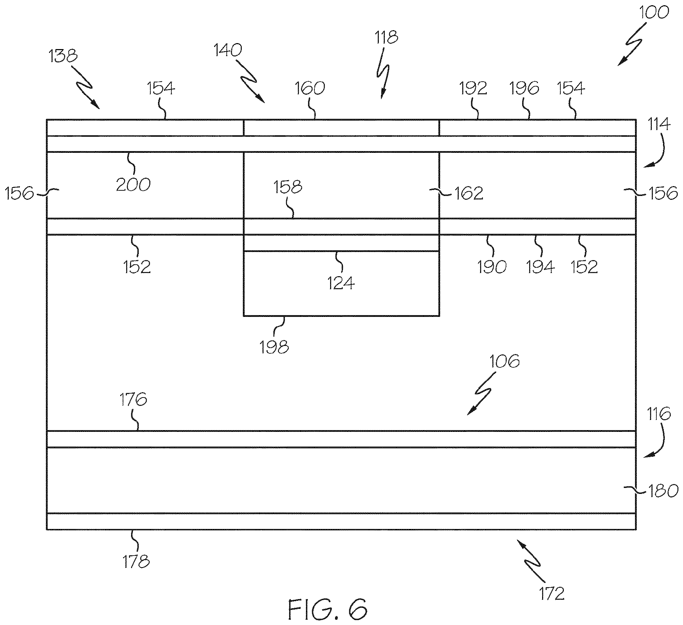

Referring to Fig. 6, first composite panel 114 may include inner mold line 190 and outer mold line 192. Upon formation of composite structure 100, for example, from interconnected first composite panel 114 and second composite panel 116, inner mold line 190 may define interior surface 194 of composite structure 100 and outer mold line 192 may define exterior surface 196 of composite structure 100. Inner mold line 190 may be continuous. Outer mold line 192 may be continuous. As used herein, "continuous" generally refers to forming an unbroken whole or without interruption. As one example, first fiber-reinforced polymer ply 152 (or plurality of first fiber-reinforced polymer plies 182) (Fig. 5) and third fiber-reinforced polymer ply 158 (or plurality of third fiber-reinforced polymer plies 186) (Fig. 5) may form a continuous inner mold line 190. As one example, second fiber-reinforced polymer ply 154 (or plurality of second fiber-reinforced polymer plies 184) (Fig. 5) and fourth fiber-reinforced polymer ply 160 (or plurality of fourth fiber-reinforced polymer plies 188) (Fig. 5) may form a continuous outer mold line 192.

RF antenna 124 may be positioned relative to RF window 118 of first composite panel 114. As one example, and as best illustrated in Fig. 6, RF antenna 124 may be disposed behind RF window 118. For instance, RF antenna 124 may be coupled along (e.g., to) inner mold line 190 of first composite panel 114 (or interior surface 194 of composite structure 100) behind second laminate 140. In such an example, RF antenna 124 may include a conformal antenna coupled (e.g., mechanically connected, adhesively bonded, etc.) to second laminate 140. As one specific, non-limiting example, RF antenna 124 may include a conformal antenna applique bonded (e.g., adhesively bonded) to inner mold line 190 of first composite panel 114, such as a thin peel and stick applique antenna. As another specific, non-limiting example, RF antenna 124 may include one or more flat antenna elements (e.g., dipole, horn, or patch antennas) mechanically coupled (e.g., fastened) to inner mold line 190 of first composite panel 114 (or interior surface 194 of composite structure 100) behind second laminate 140. Other suitable types of antenna elements are also contemplated.

As another example (not explicitly illustrated), RF antenna 124 may be disposed in front of RF window 118. For instance, RF antenna 124 may be coupled along (e.g., to) outer mold line 192 of first composite panel 114 (or exterior surface 196 of composite structure 100) in front of second laminate 140. As one specific, non-limiting example, RF antenna 124 may include a conformal exterior antenna applique bonded (e.g., adhesively bonded) to second laminate 140, such as a thin peel and stick applique antenna. While not explicitly illustrated in Fig. 6, a protective coating may be applied over the antenna applique to protect the antenna applique from exposure to the environment.

The shape of the radiating element of RF antenna 124 is dependent upon coverage and polarization desired, consideration of radiation pattern overlap with other antennas, and proximity of nearby aircraft structure. In one specific, non-limiting example, the shape may be a spiral or slotted spiral providing hemispheric circularly polarized radiation. In another specific, non-limiting example, the shape may be a sinuous spiral providing hemispheric linearly polarized radiation. In yet another specific, non-limiting example, the shape may be a slot notch providing spherical quadrant radiation.

In any of these examples, RF antenna 124 may be exchanged (e.g., decoupled and replaced). As one example, RF antenna 124 may be exchanged with a new RF antenna when damaged or not functioning properly. As another example, RF antenna 124 may be exchanged with a different type of RF antenna, for example, depending upon the desired type of communications (e.g., a mission specific antenna).

As yet another example (not explicitly illustrated), RF antenna 124 may be interposed between the layers of the sandwich structure of second laminate 140. As one example, RF antenna 124 may be interposed between third fiber-reinforced polymer ply 158 and second core 162. As another example, RF antenna 124 may be interposed between second core 162 and fourth fiber-reinforced polymer ply 160. As another example, RF antenna 124 may be interposed between plurality of third fiber-reinforced polymer plies 186 (Fig. 5). As yet another example, RF antenna 124 may be interposed between plurality of fourth fiber-reinforced polymer plies 188 (Fig. 5). In such examples, RF antenna 124 may include a conductive foil (e.g., a copper foil).

Resonance cavity 198 may be positioned behind RF window 118 and RF antenna 124. As one example, resonance cavity 198 may be coupled to inner mold line 190 of first composite panel 114 (or interior surface 194 of composite structure 100 within interior volume 106) behind second laminate 140. Resonance cavity 198 may be configured to enforce unidirectional radiation of electromagnetic radiation 150 (Fig. 1), for example, at select wavelengths (e.g., radio waves 126) (Fig. 1), transmitted from RF antenna 124. Resonance cavity 198 may further be configured to set a resonant frequency of RF antenna 124 (e.g., tune RF antenna 124). As one example, resonance cavity 198 may be lined with a dielectric material. As another example, resonance cavity 198 may be filled with a dielectric material.

The dimensions of resonance cavity 198 may be dictated by various factors. For example, the size and/or depth of resonance cavity 198 may be dictated by, for example, the size of RF antenna 124, the frequency of radio waves 126 (Fig. 1), the use of dielectric or other material inside the cavity to reduce its depth requirement, and the like.

Optionally, wire mesh 200 may be interposed within the sandwich structure of first composite panel 114. Wire mesh 200 may act as a lighting strike diversion mechanism. Wire mesh 200 may be transparent to electromagnetic radiation 150 (Fig. 1), for example, at select wavelengths (e.g., radio waves 126) (Fig. 1). As one general, non-limiting example, wire mesh 200 may include a fine aluminum mesh sheet. As another general, non-limiting example, wire mesh 200 may include a patterned aluminum mesh foil.

As one example, and as best illustrated in Fig. 6, wire mesh 200 may be interposed between second fiber-reinforced polymer ply 154 and first core 156 and fourth fiber-reinforced polymer ply 160 and second core 162. As another example (not explicitly illustrated), wire mesh 200 may be interposed between first fiber-reinforced polymer ply 152 and first core 156 and third fiber-reinforced polymer ply 158 and second core 162. As another example (not explicitly illustrated), wire mesh 200 may be interposed between plurality of second fiber-reinforced polymer plies 184 and plurality of fourth fiber-reinforced polymer plies 188 (Fig. 5). As another example (not explicitly illustrated), wire mesh 200 may be interposed between plurality of first fiber-reinforced polymer plies 182 and plurality of third fiber-reinforced polymer plies 186 (Fig. 5).

Referring to Fig. 1, and with reference to Fig. 6, any composite panels of plurality of composite panels 102 forming composite structure 100 not including RF window 118 (e.g., second composite panel 116) may include a structural third laminate 172. Third laminate 172 may include third composite material 174 (Fig. 1). Third composite material 174 may be opaque to electromagnetic radiation 150. As one general, non-limiting example, third composite material 174 may be configured to block RF signals (e.g., radio waves 126) transmitted and/or received by RF antenna 124. As one specific, non-limiting example, third composite material 174 may be opaque to radio waves 126 having frequencies from approximately 3 kHz to approximately 300 GHz.

Third laminate 172 may include at least one fifth fiber-reinforced polymer ply 176, at least one sixth fiber-reinforced polymer ply 178 and third core 180. Third core 180 may be interposed between fifth fiber-reinforced polymer ply 176 and sixth fiber-reinforced polymer ply 178 to form a sandwich structure. Third laminate 172 may include the same constituent materials (e.g., reinforcing fibrous material and/or polymer matrix material) as first laminate 138 or may include different constituent materials.

Referring to Fig. 1, in one example implementation, composite structure 100 may form structural component 110 of vehicle 112. As one general, non-limiting example, composite structure 100 (e.g., structural component 110) may be a structural portion of an airframe of an aircraft (e.g., vehicle 112).

As one specific, non-limiting example, composite structure 100 may be a wing of a fixed-wing aircraft (e.g., an airplane or a fixed-wing unmanned aerial vehicle). As another specific, non-limiting example, composite structure 100 may be a horizontal or vertical stabilizer of a fixed-wing aircraft. As another specific, non-limiting example, composite structure 100 may be a wing of a rotary-wing aircraft (e.g., a helicopter or rotorcraft unmanned aerial vehicle). As yet another specific, non-limiting example, composite structure 100 may be a tail boom of a rotary-wing aircraft. Accordingly, 3D shape 104 and/or dimensions 108 may vary depending upon, for example, the type of vehicle 112 (e.g., the type of aircraft), the type of structural component 110, the size and/or shape of structural component 110 and the like.

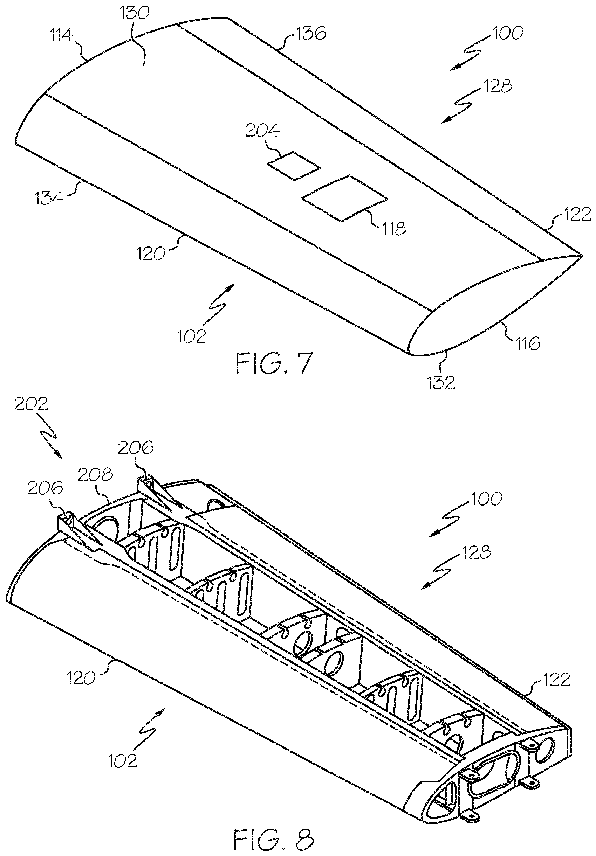

Referring to Fig. 7, in one example embodiment, composite structure 100 (e.g., structural component 110 of vehicle 112) may be composite wing 128 of an aircraft (e.g., fixed-wing or rotary-wing aircraft). Plurality of composite panels 102 may be interconnected to form composite wing 128. For example, plurality of composite panels 102 may include first composite panel 114, second composite panel 116, third composite panel 120 and fourth composite panel 122. In this illustrative example, first composite panel 114 may generally define upper surface 130 of composite wing 128, second composite panel 116 may generally define lower surface 132 of composite wing 128, third composite panel 120 may generally define leading edge 134 of composite wing 128 and fourth composite panel 122 may generally define trailing edge 136 of composite wing 128.

While one example of composite wing 128, as illustrated in Fig. 2, may include four composite panels 102, those skilled in the art will recognize that in other examples any suitable plurality and/or configuration of composite panels 102 may be used to form composite wing 128 (or other structural component 110 of vehicle 112). As one example, composite wing 128 may include two interconnected composite panels 102 in a clamshell configuration. For instance, first composite panel 114 may generally define upper surface 130, an upper portion of leading edge 134 and an upper portion of trailing edge 136 of composite wing 128. Second composite panel 116 may generally define lower surface 132, a lower portion of leading edge 134 and a lower portion of trailing edge 136 of composite wing 128. As another example, more than four composite panels 102 may be interconnected to form composite wing 128 (or other structural component 110 of vehicle 112).

Composite wing 128 may include at least one RF window 118. RF window 118 may be integrally formed into at least one composite panel (e.g., first composite panel 114) of plurality of composite panels 102 forming composite wing 128. As one example, and as best illustrated in Fig. 2, RF window 118 may be integrally formed into first composite panel 114.

Still referring to Fig. 7, and with reference to Fig. 1, suitable structural and/or transmissive analysis may be used to determine an appropriate location for RF window 118 on other types of structural components 110 (e.g., a tail boom) of vehicle 112 formed by composite structure 100. As one example, the longitudinal position of the RF window 118 on composite wing 128 may be dependent upon the desired field of view coverage and the desired polarization of radios waves 126, consideration of radiation pattern overlap with other antennas, proximity of nearby structures (e.g., primary or secondary structures) of vehicle 112 for consideration of shadowing and diffractions, and/or the impact of the presence of RF window 118 to the strain tolerance of composite wing 128.

As used herein, "longitudinal" and/or "longitudinally" is generally defined as the lengthwise direction of the structure. As one example, a longitudinal position on an aircraft is defined with respect to the length of the aircraft and a longitudinal direction of the aircraft is defined from the fore to the aft of the aircraft. As another example, a longitudinal position on an a wing of the aircraft is defined with respect to the length (e.g., the spanwise dimension) of the wing and a longitudinal direction of the wing is defined from the root of the wing (e.g., where coupled to the fuselage of the aircraft) to the outboard end of the wing.

In one non-limiting example, placement of RF window 118 in upper surface 130 of composite wing 128 may, for example, consider radiation pattern overlap with a similar symmetric antenna located in the other wing (not explicitly illustrated). In another non-limiting example, placement of RF window 118 longitudinally along composite wing 128 may, for example, consider proximity to the root of the wing, typically approximately one-half to one-fourth of a wavelength at the center frequency of the operable band. In another non-limiting example, placement in an airframe of an aircraft may, for example, consider orientation of RF window 118 to support air-to-air, air-to-space and/or air-to-ground radio coverage. In another non-limiting example, placement of RF window 118 in a port or starboard panel may, for example, consider interactions with nearby structures, radiation pattern overlap with a similar symmetric antenna located on an opposite side of the aircraft and/or orientation of RF window 118 to support air-to-air, air-to-space and/or air-to-ground radio coverage. In yet another non-limiting example, placement of RF window 118 in a leading edge or a trailing edge of a vertical tail or horizontal wing may, for example, consider interactions with nearby structures, radiation pattern overlap with a similar symmetric antenna located on an opposite side of the aircraft and/or orientation of RF window 118 to support air-to-air, air-to-space, and/or air-to-ground radio coverage.

While one example of composite wing 128 (e.g., composite structure 100), as illustrated in Fig. 7, includes only one RF window 118 (e.g., in first composite panel 114 of plurality of composite panels 102) located on upper surface 130 for air-to-space communications, in other examples, composite wing 128 may include more than one RF window 118, for example, located on the same surface or a different surface as another RF window 118 (not explicitly shown in Fig. 2).

Still referring to Fig. 7, composite structure 100 (e.g., composite wing 128) may include at least one access panel 204. Access panel 204 may be formed in at least one composite panel (e.g., first composite panel 114) of plurality of composite panels 102. Access panel 204 may be configured to provide access to interior volume 106 (Fig. 1) of composite structure 100, for example, to access RF antenna 124 and/or resonance cavity 198 (Fig. 1). Alternately, when RF window 118 is located near a root of composite wing 128, access may be readily obtained by removing composite wing 128 from the primary structure (e.g., the airframe) of the aircraft.

Referring to Fig. 1, and with reference to Fig. 6, composite structure 100 may include plurality of internal supports 202. Plurality of internal supports 202 may be coupled to interior surface 194 (Fig. 6) of composite structure 100 (e.g., inner mold line 190 (Fig. 6) of plurality of composite panels 102) and disposed within interior volume 106. Plurality of internal supports 202 may increase the structural integrity of composite structure 100.

The illustrated embodiment of vehicle 112, conformal composite antenna assembly 210, first composite panel 114 and/or second composite panel 116 in Fig. 1 is not meant to imply physical or architectural limitations to the manner in which different example embodiments may be implemented. Other features in addition to and/or in place of the ones illustrated may be used. Some features may be unnecessary in some example embodiments. Also, some of the blocks are presented to illustrate some functional features. One or more of these blocks may be combined and/or divided into different blocks when implemented in different example embodiments. Further, conformal composite antenna assembly 210 may include additional materials other than composites (e.g., first composite material 146, second composite material 148 and/or third composite material 174) and/or cores (e.g., first core 156, second core 162 and/or third core 180).

Referring to Fig. 8, and with reference to Fig. 1, as one example, plurality of internal supports 202 may include spars 206 and/or ribs 208. Other internal supports 202, for example, stringers, struts, etc., may also be used.

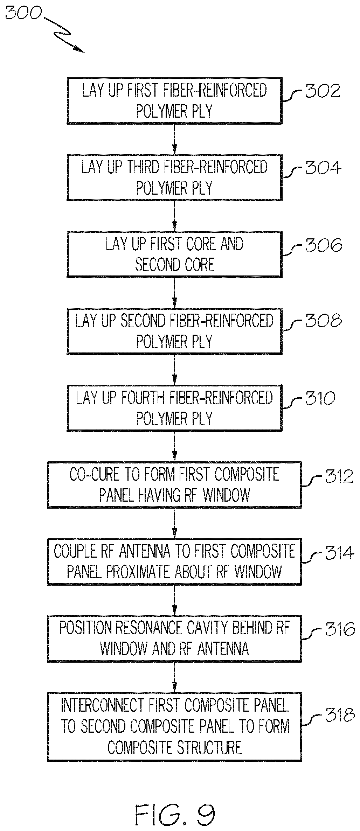

Referring to Fig. 9, and with reference to Figs. 1-6, one embodiment of the disclosed method, generally designated 300, for manufacturing a conformal composite antenna assembly, for example, conformal composite antenna assembly 210 (Fig. 1), may include laying up, for example, on a mold, at least one first fiber-reinforced polymer ply 152, as shown at block 302. First fiber-reinforced polymer ply 152 may include an opening defined by inner perimeter edge 212 (Fig. 5).

Method 300 may further include laying up at least one third fiber-reinforced polymer ply 158 over first fiber-reinforced polymer ply 152, as shown at block 304. Third fiber-reinforced polymer ply 158 may be positioned within opening in first fiber-reinforced polymer ply 152 and joined along inner perimeter edge 212. For example, third fiber-reinforced polymer ply 158 may be interleafed with first fiber-reinforced polymer ply 152.

Method 300 may further include laying up first core 156 and second core 162 over first fiber-reinforced polymer ply 152 and third fiber-reinforced polymer ply 158, as shown at block 306. First core 156 may be disposed over first fiber-reinforced polymer ply 152. Second core 162 may be disposed over third fiber-reinforced polymer ply 158. As one example, first core 156 may include an opening defined by inner perimeter edge 216 (Fig. 5). Second core 162 may be positioned within opening in first core and joined along inner perimeter edge 216. As another example, first core 156 may be formed, for example, by using plurality of conductive reinforcing pins 166 (e.g., pin-reinforced first core 164 shown in Fig. 4) and second core 162 may be formed within inner perimeter edge 216, for example, by using a plurality of nonconductive reinforcing pins 170 (e.g., pin-reinforced second core 168 shown in Fig. 4).

Method 300 may further include laying up second fiber-reinforced polymer ply 154 over first core 156, as shown at block 308. Second fiber-reinforced polymer ply 154 may include an opening defined by inner perimeter edge 214 (Fig. 5). Opening in second fiber-reinforced polymer ply 154 may expose second core 162.

Method 300 may further include laying up at least one fourth fiber-reinforced polymer ply 160 over at least a portion of second fiber-reinforced polymer ply 154 and second core 162, as shown at block 310. Fourth fiber-reinforced polymer ply 160 may be positioned within opening in second fiber-reinforced polymer ply 154 and joined along inner perimeter edge 214. For example, fourth fiber-reinforced polymer ply 160 may be interleafed with second fiber-reinforced polymer ply 154.

Method 300 may further include co-curing first fiber-reinforced polymer ply 152, second fiber-reinforced polymer ply 154, first core 156, third fiber-reinforced polymer ply 158, fourth fiber-reinforced polymer ply 160 and second core 162 to form first composite panel 114, as shown at block 312.

Thus, first fiber-reinforced polymer ply 152, second fiber-reinforced polymer ply 154, first core 156, third fiber-reinforced polymer ply 158, fourth fiber-reinforced polymer ply 160 and second core 162 may form first composite panel 114 having a sandwich structure. First fiber-reinforced polymer ply 152, second fiber-reinforced polymer ply 154 and first core 156 may form first laminate 138 of first composite panel 114. Third fiber-reinforced polymer ply 158, fourth fiber-reinforced polymer ply 160 and second core 162 may form second laminate 140 of first composite panel 114. Second laminate 140 may be integral to first laminate 138 (e.g., sharing a common inner mold line 190 and outer mold line 192 (Fig. 6)) and define RF window 118 in first composite panel 114.

Method 300 may further include coupling RF antenna 124 to first composite panel 114 proximate (e.g., at or near), for example, one side of, RF window 118, as shown at block 314. As one example, RF antenna 124 may be coupled to first composite panel 114 behind RF window 118 (e.g., coupled to second laminate 140 about inner mold line 190 (Fig. 6)). As one example, RF antenna 124 may be coupled to composite panel 114 in front of RF window 118 (e.g., coupled to second laminate 140 about outer mold line 192 (Fig. 6)). As another example, RF antenna 124 may be interposed within second laminate 140.

Method 300 may further include positioning resonance cavity 198 (Fig. 6) behind RF window 118 and RF antenna 124, as shown at block 316. As one example, resonance cavity 198 may be coupled to first composite panel 114 behind RF window 118 and RF antenna 124 (e.g., (e.g., coupled to second laminate 140 about inner mold line 190 (Fig. 6)).

Method 300 may further include interconnecting first composite panel 114 with at least one additional composite panel (e.g., second composite panel 116 (Fig. 1)) to form composite structure 100, as shown at block 318.

Composite structure 100 may form structural component 110 of vehicle 112 (Fig. 1). As one example, and as illustrated in Fig. 7, composite structure 100 may form composite wing 128 of an aircraft. Thus, composite structure 100 (e.g., composite wing 128) may include conformal composite antenna assembly 210.

Modifications, additions, or omissions may be made to method 300 without departing from the scope of the present disclosure. Method 300 may include more, fewer, or other steps. Additionally, steps may be performed in any suitable order. Further, method 300 may include additional materials other than composites (e.g., first composite panel 114 and/or second composite panel 116 (Fig. 1)) and/or cores (e.g., first core 156, second core 162 and/or third core 180 (Fig. 1)).

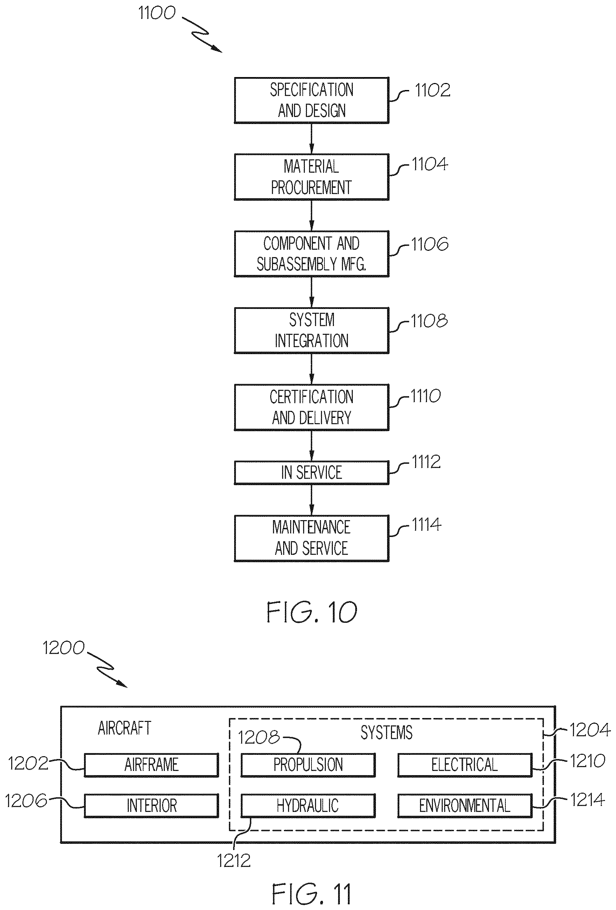

Examples of the present disclosure may be described in the context of aircraft manufacturing and service method 1100 as shown in Fig. 10 and aircraft 1200 as shown in Fig. 11. During pre-production, the illustrative method 1100 may include specification and design, as shown at block 1102, of aircraft 1200 and material procurement, as shown at block 1104. During production, component and subassembly manufacturing, as shown at block 1106, and system integration, as shown at block 1108, of aircraft 1200 may take place. Thereafter, aircraft 1200 may go through certification and delivery, as shown block 1110, to be placed in service, as shown at block 1112. While in service, aircraft 1200 may be scheduled for routine maintenance and service, as shown at block 1114. Routine maintenance and service may include modification, reconfiguration, refurbishment, etc. of one or more systems of aircraft 1200.

Each of the processes of illustrative method 1100 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

As shown in Fig. 11, aircraft 1200 produced by illustrative method 1100 may include airframe 1202 with a plurality of high-level systems 1204 and interior 1206. Examples of high-level systems 1204 include one or more of propulsion system 1208, electrical system 1210, hydraulic system 1212 and environmental system 1214. Any number of other systems may be included. Although an aerospace example is shown, the principles disclosed herein may be applied to other industries, such as the automotive and marine industries.

The apparatus and methods shown or described herein may be employed during any one or more of the stages of the manufacturing and service method 1100. For example, components or subassemblies corresponding to component and subassembly manufacturing (block 1106) may be fabricated or manufactured in a manner similar to components or subassemblies produced while aircraft 1200 is in service (block 1112). Also, one or more examples of the apparatus and methods, or combination thereof may be utilized during production stages (blocks 1108 and 1110), for example, by substantially reducing the risks associated with counterfeit components in aircraft manufacturing and service processes. Similarly, one or more examples of the apparatus and methods, or a combination thereof, may be utilized, for example and without limitation, while aircraft 1200 is in service (block 1112) and during maintenance and service stage (block 1114).

Although various embodiments of the disclosed apparatus and method have been shown and described, modifications may occur to those skilled in the art upon reading the specification. The present application includes such modifications and is limited only by the scope of the claims.

## Claims

1. A composite panel comprising:
a first laminate (138) comprising a first composite material (146) opaque to electromagnetic radiation, said first laminate further comprising an outer perimeter edge (142) and an inner perimeter edge (144);
a second laminate (140) comprising a second composite material (148) transparent to electromagnetic radiation, said second laminate being disposed within and physically joined with said first laminate along said inner perimeter edge; and
an antenna (124) that is coupled to, or disposed between layers of, the second laminate (140);
wherein said first laminate (138) comprises:
at least one first fiber-reinforced polymer ply (152);
at least one second fiber-reinforced polymer ply (154); and
a first core (156) interposed between said first fiber-reinforced polymer ply and said second fiber-reinforced polymer ply to form a first sandwich structure; and
wherein said second laminate (140) comprises:
at least one third fiber-reinforced polymer ply (158);
at least one fourth fiber-reinforced polymer ply (160); and
a second core (162) interposed between said third fiber-reinforced polymer ply and said fourth fiber-reinforced polymer ply to form a second sandwich structure; and wherein
said first core (156) and said second core (162) are each formed from a material comprising one of a honeycomb structured material, a foam material or a syntactic foam material.

2. The composite panel of Claim 1 wherein:
said third fiber-reinforced polymer ply (158) is interleaved with said first fiber-reinforced polymer ply (152),
said fourth fiber-reinforced polymer ply (160) is interleaved with said second fiber-reinforced polymer ply (154), and
said second core (162) adjoined with said first core (156).

3. The composite panel of Claims 1 or 2 wherein said third fiber-reinforced polymer ply (158), said fourth fiber-reinforced polymer ply (160), and said second core (162) are nonconductive and dielectric.

4. The composite panel of any of Claims 1 to 3 further comprising:
a resonance cavity (198) disposed behind said second laminate (140) and said antenna (124).

5. The composite panel of Claim 4 wherein said antenna (124) is interposed between said third fiber-reinforced polymer ply (158) and said second core (162).

6. The composite panel of Claim 4 wherein said antenna (124) is interposed between said second core (162) and said fourth fiber-reinforced polymer ply (160).

7. The composite panel of Claim 4 further comprising:
an inner mold line (190) defined by said first laminate (138) and said second laminate (140);
an outer mold line (192) defined by said first laminate and said second laminate, and
wherein said antenna (124) is coupled to said second laminate along said inner mold line.

8. The composite panel of Claim 4 further comprising:
an inner mold line (190) defined by said first laminate (138) and said second laminate (140);
an outer mold line (192) defined by said first laminate and said second laminate, and
wherein said antenna (124) is coupled to said second laminate along said outer mold line.

## Patentansprüche

1. Verbundplatte, aufweisend:
einen ersten Schichtstoff (138), der ein erstes Verbundmaterial (146) aufweist, das für elektromagnetische Strahlung opak ist, wobei der erste Schichtstoff ferner einen Außenumfangsrand (142) und einen Innenumfangsrand (144) aufweist;
einen zweiten Schichtstoff (140), der ein zweites Verbundmaterial (148) aufweist, das für elektromagnetische Strahlung transparent ist, wobei der zweite Schichtstoff innerhalb des ersten Schichtstoffs angeordnet und entlang des Innenumfangsrands physisch an den ersten Schichtstoff angefügt ist; und
eine Antenne (124), die an den zweiten Schichtstoff (140) gekoppelt oder zwischen Schichten desselben angeordnet ist;
wobei der erste Schichtstoff (138) aufweist:
mindestens eine erste faserverstärkte Polymerlage (152);
mindestens eine zweite faserverstärkte Polymerlage (154); und
einen ersten Kern (156), der zwischen der ersten faserverstärkten Polymerlage und der zweiten faserverstärkten Polymerlage angeordnet ist, um eine erste Sandwichstruktur zu bilden; und
wobei der zweite Schichtstoff (140) aufweist:
mindestens eine dritte faserverstärkte Polymerlage (158);
mindestens eine vierte faserverstärkte Polymerlage (160); und
einen zweiten Kern (162), der zwischen der dritten faserverstärkten Polymerlage und der vierten faserverstärkten Polymerlage angeordnet ist, um eine zweite Sandwichstruktur zu bilden; und wobei
der erste Kern (156) und der zweite Kern (162) jeweils aus einem Material gebildet sind, das ein Honigwaben-Strukturmaterial, ein Schaumstoffmaterial oder ein syntaktisches Schaumstoffmaterial aufweist.

2. Verbundplatte nach Anspruch 1, wobei:
die dritte faserverstärkte Polymerlage (158) mit der ersten faserverstärkten Polymerlage (152) verschachtelt ist,
die vierte faserverstärkte Polymerlage (160) mit der zweiten faserverstärkten Polymerlage (154) verschatelt ist, und
der zweite Kern (162) an den ersten Kern (156) angefügt ist.

3. Verbundplatte nach Anspruch 1 oder 2, wobei die dritte faserverstärkte Polymerlage (158), die vierte faserverstärkte Polymerlage (160) und der zweite Kern (162) nicht-leitfähig und dielektrisch sind.

4. Verbundplatte nach einem der Ansprüche 1 bis 3, ferner aufweisend:
einen Resonanzhohlraum (198), der hinter dem zweiten Schichtstoff (140) und der Antenne (124) angeordnet ist.

5. Verbundplatte nach Anspruch 4, wobei die Antenne (124) zwischen der dritten faserverstärkten Polymerlage (158) und dem zweiten Kern (162) angeordnet ist.

6. Verbundplatte nach Anspruch 4, wobei die Antenne (124) zwischen dem zweiten Kern (162) und der vierten faserverstärkten Polymerlage (160) angeordnet ist.

7. Verbundplatte nach Anspruch 4, ferner aufweisend:
eine Innenformlinie (190), die durch den ersten Schichtstoff (138) und den zweiten Schichtstoff (140) definiert wird;
eine Außenformlinie (192), die durch den ersten Schichtstoff und den zweiten Schichtstoff definiert wird, und
wobei die Antenne (124) entlang der Innenformlinie an den zweiten Schichtstoff gekoppelt ist.

8. Verbundplatte nach Anspruch 4, ferner aufweisend:
eine Innenformlinie (190), die von dem ersten Schichtstoff (138) und dem zweiten Schichtstoff (140) definiert wird;
eine Außenformlinie (192), die von dem ersten Schichtstoff und dem zweiten Schichtstoff definiert wird, und
wobei die Antenne (124) entlang der Außenformlinie an den zweiten Schichtstoff gekoppelt ist.

## Revendications

1. Panneau composite comprenant :
un premier stratifié (138) comprenant un premier matériau composite (146) opaque à un rayonnement électromagnétique, ledit premier stratifié comprenant en outre un bord périmétrique extérieur (142) et un bord périmétrique intérieur (144) ;
un second stratifié (140) comprenant un second matériau composite (148) transparent à un rayonnement électromagnétique, ledit second stratifié étant disposé dans et joint physiquement audit premier stratifié le long dudit bord périmétrique intérieur ; et
une antenne (124) qui est accouplée au, ou disposée entre des couches du, second stratifié (140) ;
dans lequel ledit premier stratifié (138) comprend :
au moins un premier pli de polymère renforcé de fibres (152) ;
au moins un deuxième pli de polymère renforcé de fibres (154) ; et
une première partie centrale (156) interposée entre ledit premier pli de polymère renforcé de fibres et ledit deuxième pli de polymère renforcé de fibres pour former une première structure sandwich ; et
dans lequel ledit second stratifié (140) comprend :
au moins un troisième pli de polymère renforcé de fibres (158) ;
au moins un quatrième pli de polymère renforcé de fibres (160) ; et
une seconde partie centrale (162) interposée entre ledit troisième pli de polymère renforcé de fibres et ledit quatrième pli de polymère renforcé de fibres pour former une seconde structure sandwich ; et dans lequel
ladite première partie centrale (156) et ladite seconde partie centrale (162) sont chacune formées à partir d'un matériau comprenant un parmi un matériau structuré en nid d'abeilles, un matériau en mousse ou un matériau en mousse syntactique.

2. Panneau composite selon la revendication 1 dans lequel :
ledit troisième pli de polymère renforcé de fibres (158) est intercalé avec ledit premier pli de polymère renforcé de fibres (152),
ledit quatrième pli de polymère renforcé de fibres (160) est intercalé avec ledit deuxième pli de polymère renforcé de fibres (154), et
ladite seconde partie centrale (162) est contiguë à ladite première partie centrale (156).

3. Panneau composite selon les revendications 1 ou 2 dans lequel ledit troisième pli de polymère renforcé de fibres (158), ledit quatrième pli de polymère renforcé de fibres (160), et ladite seconde partie centrale (162) sont non conducteurs et diélectriques.

4. Panneau composite selon l'une quelconque des revendications 1 à 3 comprenant en outre :
une cavité de résonance (198) disposée derrière ledit second stratifié (140) et ladite antenne (124).

5. Panneau composite selon la revendication 4 dans lequel ladite antenne (124) est interposée entre ledit troisième pli de polymère renforcé de fibres (158) et ladite seconde partie centrale (162).

6. Panneau composite selon la revendication 4 dans lequel ladite antenne (124) est interposée entre ladite seconde partie centrale (162) et ledit quatrième pli de polymère renforcé de fibres (160).

7. Panneau composite selon la revendication 4 comprenant en outre :
une ligne de moule intérieure (190) définie par ledit premier stratifié (138) et ledit second stratifié (140) ;
une ligne de moule extérieure (192) définie par ledit premier stratifié et ledit second stratifié, et
dans lequel ladite antenne (124) est accouplée audit second stratifié le long de ladite ligne de moule intérieure.

8. Panneau composite selon la revendication 4 comprenant en outre :
une ligne de moule intérieure (190) définie par ledit premier stratifié (138) et ledit second stratifié (140) ;
une ligne de moule extérieure (192) définie par ledit premier stratifié et ledit second stratifié, et
dans lequel ladite antenne (124) est accouplée audit second stratifié le long de ladite ligne de moule extérieure.
